# EUROPÄISCHE PATENTANMELDUNG

(11) **EP 1 752 760 A1**
(43) Veröffentlichungstag der Anmeldung: **14.02.2007**
(21) Anmeldenummer: 06116869.6
(22) Anmeldetag: 09.07.2006
(51) Int. Cl.: G01N 21/95

(54) **Vorrichtung und Verfahren zur Inspektion der Oberfläche eines Wafers**

(30) Priorität: 09.08.2005 DE
(71) Anmelder: Vistec Semiconductor Systems GmbH, 35578 Wetzlar (DE)
(72) Erfinder: Sulik, Wolfgang, 35614, Aßlar (DE); Heiden, Michael, 61200, Wölfersheim (DE)
(74) Vertreter: Reichert, Werner Franz

(57) **Zusammenfassung**

Die Erfindung betrifft eine Vorrichtung und ein Verfahren zur Inspektion der Oberfläche eines Wafers, wobei mehrere schmalbandige Spektren von der Oberfläche des Wafers aufgenommen werden.

## Beschreibung

Die Erfindung betrifft eine Vorrichtung und ein Verfahren zur Inspektion der Oberfläche eines Wafers, wobei zur Inspektion ein Bild von der Oberfläche des Wafers aufgenommen wird, das aus mehreren schmalbandigen Spektren besteht.

Eine Vorrichtung und ein Verfahren der genannten Art sind nach US 6,847,443 B1 bekannt. Dabei wird die Oberfläche eines Wafers aus einer Lichtquelle mit mehreren schmalbandigen Spektren beleuchtet, wobei die Kamera zur Aufnahme der Oberfläche des Wafers Sensitivitätsmaxima aufweist, die mit den Zentralfrequenzen der schmalbandigen Spektren korrespondieren.

Der Erfindung liegt die Aufgabe zugrunde, dem Stand der Technik, ausgehend von der eingangs beschriebenen Art, eine optimierte Vorrichtung samt Verfahren zur Verfügung zu stellen.

Diese Aufgabe wird durch die im Anspruch 1 bestimmten Vorrichtungen ebenso wie durch das im Anspruch 12 bestimmten Verfahren gelöst. Vorteilhafte Ausgestaltungen der Erfindung sind in den weiteren Unteransprüchen angegeben.

Erfindungsgemäß ist die Aufgabe bei einer ersten Vorrichtung zur Inspektion eines Wafers, umfassend eine Beleuchtungseinrichtung zur Beleuchtung eines Aufnahmebereichs des Wafers mit mindestens einem breitbandigen Spektrum und eine optische Aufnahmeeinrichtung mit einem Detektor zur polychromen Aufnahme des Aufnahmebereichs des Wafers aufgrund der Beleuchtung, dadurch gelöst, dass die Aufnahmeeinrichtung eine Filteranordnung zur Auswahl von mehreren breitbandigen Spektren umfasst.

Durch die angegebene Anordnung kann ein zusätzliches vollständig polychromes Bild von der Oberfläche des Wafers aufgrund der Beleuchtung aufgenommen werden.

Erfindungsgemäß ist die oben genannte Aufgabe des weiteren bei einer zweiten Vorrichtung zur Inspektion der Oberfläche eines Wafers, umfassend eine Beleuchtungseinrichtung zur Beleuchtung eines Aufnahmebereichs des Wafers mit mehreren schmalbandigen Spektren und eine optische Aufnahmeeinrichtung mit einem Detektor zur polychromen Aufnahme des Aufnahmebereichs des Wafers aufgrund der Beleuchtung, dadurch gelöst, dass die Beleuchtungseinrichtung oder die Aufnahmeeinrichtung eine Filteranordnung enthält, die die Intensität der Spektren nivelliert. Im Allgemeinen weisen die mehreren schmalbandigen Spektren eine unterschiedliche Intensität auf. Dies kann zur Übersteuerung des Detektors für den Bereich des intensivsten Spektrums führen. Durch die Nivellierung der Intensitäten der mehreren schmalbandigen Spektren wird eine Übersteuerung des Detektors für ein oder mehrere Spektren vermieden.

Erfindungsgemäß ist die oben genannte Aufgabe darüber hinaus bei einer dritten Vorrichtung zur Inspektion der Oberfläche eines Wafers, umfassend eine Beleuchtungseinrichtung zur Beleuchtung eines Aufnahmebereichs des Wafers mit mehreren schmalbandigen Spektren und eine optische Aufnahmeeinrichtung mit einem Detektor zur polychromen Aufnahme des Aufnahmebereichs des Wafers aufgrund der Beleuchtung, dadurch gelöst, dass die Beleuchtungseinrichtung und die Aufnahmeeinrichtung für die Hellfeldaufnahme ausgerichtet sind. Gerade für die Hellfeldaufnahme weist die Beleuchtung mit mehreren schmalbandigen Spektren Vorteile auf. So sind bei Mehrschichtsystemen mit durchscheinenden Schichten weiche Konturverläufe durch deutliche Interferenz, d. h. Auslöschung an Schichtdickenänderungen, zu erkennen. Durch die kleinere Bandbreite und die dadurch größere Kohärenz des Lichtes wird die Sichtbarkeit von Interferenzeffekten an dünnen Schichten deutlich verbessert.

Vorzugsweise ist auch bei der erst- und letztgenannten Vorrichtung vorgesehen, dass die Beleuchtungseinrichtung oder die Aufnahmeeinrichtung eine Filteranordnung enthält, die die Intensität der Spektren nivelliert.

Zweckmäßigerweise ist dabei vorgesehen, dass die Filteranordnung die Spektren kürzerer Wellenlängen stärker dämpft. Üblicherweise stellen Beleuchtungseinrichtungen die Spektren kürzerer Wellenlängen mit höherer Intensität zur Verfügung. Durch die angegebene Filteranordnung werden die Spektren auf ein gleiches Intensitätsniveau gebracht. Damit wird eine übersteuerungsfreie und gleichmäßige Detektion der Spektren durch die Aufnahmeeinrichtung gewährleistet.

Günstigerweise ist vorgesehen, dass die Beleuchtungseinrichtung und die Aufnahmeeinrichtung für die Hellfeldaufnahme ausgerichtet sind. So entfaltet auch die erste und zweite Vorrichtung ihren vollen Vorteil durch die Kombination der Beleuchtung mit schmalbandigen Spektren und Hellfeldaufnahme, wie bereits oben ausgeführt.

Vorteilhafterweise ist vorgesehen, dass die Beleuchtungseinrichtung drei Laser umfasst. Dies hat den Vorteil, dass schmalbandige Spektren unterschiedlicher Wellenlänge preiswert zur Verfügung gestellt sind.

Mit besonderem Vorteil ist vorgesehen, dass die Beleuchtungseinrichtung eine polychrome Lichtquelle und eine Filteranordnung zur Auswahl der schmalbandigen Spektren umfasst.

Die so beschriebene Ausführung der Beleuchtungseinrichtung hat im Vergleich zur Ausführung mit Lasern den Vorteil, dass die Breite der schmalbandigen Spektren durch die Filteranordnung bestimmt werden kann und nicht durch den Laser fest vorgegeben ist. Dies ist dann von Vorteil, wenn die schmalbandigen Spektren eine Mindestbreite aufweisen sollen, um Speckles auf der zu inspizierenden Oberfläche zu vermeiden. Als polychrome Lichtquelle kann dabei sowohl eine durchgehend breitbandige Glühemissions- oder Lichtbogenlampe dienen, wie auch eine Lampe mit diskreten Spektren, wie etwa eine Quecksilberhochdruckdampflampe. Bei einer Lampe mit diskreten Spektren kann sich die Filteranordnung darauf beschränken, unerwünschte Spektrallinien auszublenden. Dies vereinfacht die Filterauswahl.

Idealerweise ist vorgesehen, dass die schmalbandigen Spektren im sichtbaren Bereich der Farben rot, grün und blau liegen. Daneben könnten die Spektren ganz oder teilweise auch im Bereich UV oder IR liegen. Dies hat den Vorteil, dass als Detektor ein preiswerter, herkömmlicher Kamerachip verwendet werden kann. Darüber hinaus kann direkt ein sichtbares Bild ohne Falschfarben erzeugt werden.

Nach einer Weiterbildung der Erfindung ist vorgesehen, dass die schmalbandigen Spektren eine spektrale Breite von kleiner 20 nm, insbesondere kleiner 10 nm, insbesondere kleiner 5 nm, insbesondere kleiner 1 nm aufweisen. Mit zunehmend kleinerer Bandbreite nimmt die Kohärenz des Lichtes zu. Die Sichtbarkeit von Interferenzeffekten an dünneren Schichten wird dabei verbessert. Besonders bewährt hat sich eine spektrale Breite von etwa 10 nm. Dies erlaubt eine ausreichend gute Interferenz der weitgehend diskreten Wellenlängen innerhalb der betrachteten dünnen Schichtsysteme bei der Hellfeldaufnahme.

Entsprechend einer Ausführungsform ist der Detektor eine Kamera. Die Kamera kann etwa einen RGB CCD-Chip aufweisen.

Entsprechend einer weiteren Ausführungsform ist der Detektor eine 3-Chip-Kamera. Eine 3-Chip-Kamera enthält einen Strahlteiler, der den aufzunehmenden Lichtstrahl in 3 Spektralbereiche auftrennt, welche anschließend von drei unabhängigen Chips detektiert werden. Der Farbteiler kann etwa nach den Farben rot, grün und blau aufteilen. Eine 3-Chip-Kamera kann eine höhere Auflösung als eine Ein- Chip- Kamera aufweisen.

Entsprechend einer bevorzugten Ausführungsform ist vorgesehen, dass die Aufnahmeeinrichtung Sensitivitäts-Peaks aufweist, die mit den Spektren der Beleuchtungseinrichtung übereinstimmen. Dies hat den Vorteil, dass die Empfindlichkeit der Kamera genau auf das zur Verfügung stehende Beleuchtungslicht abgestimmt ist.

Erfindungsgemäß wird die eingangs genannte Aufgabe ebenso bei einem Verfahren zur Inspektion der Oberfläche eines Wafers mit den folgenden Verfahrensschritten gelöst:
- Beleuchten eines Aufnahmebereichs des Wafers mit mindestens einem breitbandigen Spektrum,
- Aufnehmen mehrerer schmalbandiger Spektren vom Aufnahmebereich aufgrund der Beleuchtung.

Erfindungsgemäß wird des weiteren die ursprünglich genannte Aufgabe bei einem zweiten Verfahren zur Inspektion der Oberfläche des Wafers mit den folgenden Verfahrensschritten gelöst:
- Nivellieren mehrerer schmalbandiger Spektren auf einen gemeinsamen Intensitätsbereich,
- Beleuchten eines Aufnahmebereichs des Wafers mit den nivellierten schmalbandigen Spektren,
- Aufnehmen eines Aufnahmebereichs aufgrund der Beleuchtung.

Erfindungsgemäß wird darüber hinaus die ursprünglich genannte Aufgabe bei einem dritten Verfahren mit den folgenden Verfahrensschritten gelöst:
- Beleuchten eines Aufnahmebereichs des Wafers mit mehreren schmalbandigen Spektren unter einem ersten Winkel,
- Aufnehmen des Aufnahmebereichs aufgrund der Beleuchtung unter einem vom Wafer zum ersten Winkel gespiegelten Winkel, sodass eine Hellfeldaufnahme realisiert ist.

Bei den drei oben genannten Verfahren realisieren sich die bei den entsprechenden Vorrichtungen genannten Vorteile.

Vorteilhafte Ausgestaltungen der oben genannten Verfahren sind analog der vorteilhaften Ausgestaltungen der Vorrichtungen.

Im Folgenden wird die Erfindung anhand schematischer Darstellungen zu einem Ausführungsbeispiel näher erläutert. Gleiche Bezugszeichen in den einzelnen Figuren beizeichnen dabei gleiche Elemente. Es zeigen
- Fig. 1: eine erfindungsgemäße Vorrichtung in Seitenansicht,
- Fig. 2: eine weitere erfindungsgemäße Vorrichtung in Seitenansicht,
- Fig. 3: eine erste Beleuchtungseinrichtung mit einem RGB-Filter,
- Fig. 4: eine zweite Beleuchtungseinrichtung mit einem wellenselektivem Strahlteiler,
- Fig. 5: eine dritte Beleuchtungseinrichtung mit einem RGB-Reflexionsfilter und
- Fig. 6: eine vierte Beleuchtungseinrichtung mit drei Laserquellen.

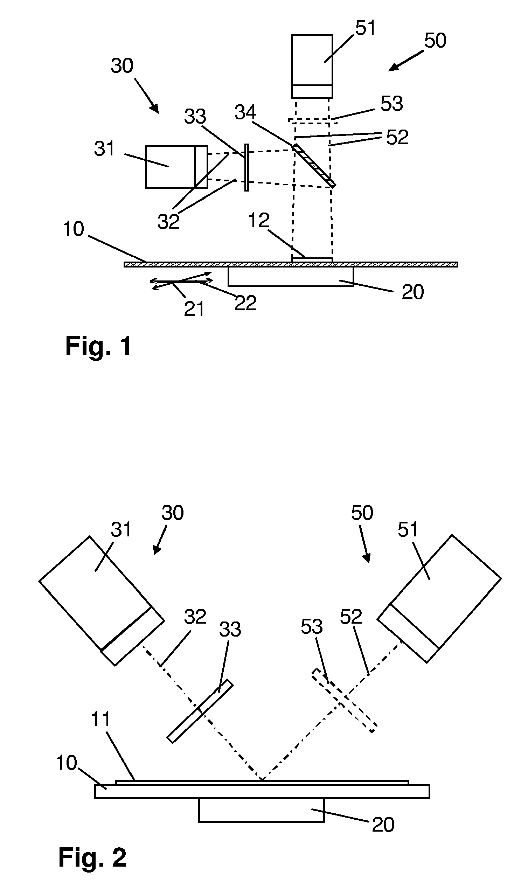

Die Figur 1 zeigt in Seitenansicht eine erfindungsgemäße Vorrichtung zur Inspektion der Oberfläche eines Wafers 10. Eine Beleuchtungseinrichtung 30 beleuchtet einen Aufnahmebereich 12 des Wafers 10, der von einer Aufnahmeeinrichtung 50 aufgenommen wird. Das von der Aufnahmeeinrichtung 50 aufgenommene Bild wird in einer hier nicht dargestellten Bildverarbeitungseinheit verarbeitet und ausgewertet. Die Bildverarbeitungseinheit ist in einem ebenfalls nicht dargestellten Computersystem integriert, das auch die Bewegung des Wafers durch die Transporteinrichtung 20 in den Richtungen 21 und 22 unter dem Aufnahmebereich hinweg steuert. Alternativ ist auch eine Steuerung des Beleuchtungs- und Aufnahmestrahls bei feststehendem Wafer denkbar. Die Beleuchtungseinrichtung 30 umfasst eine Lichtquelle 31, deren Beleuchtungsstrahlengang 32 über einen Teilerspiegel 34 im Wesentlichen senkrecht auf die Oberfläche des Wafers 10 in den Aufnahmebereich 12 umgelenkt wird. Die Aufnahmeeinrichtung 50 umfasst eine Kamera 51 mit Objektiv, die den Aufnahmebereich 12 des Wafers 10 über ihren Abbildungsstrahlengang 52 im Wesentlichen senkrecht zur Waferoberfläche durch den Teilerspiegel hindurch aufnimmt. Die Beleuchtungseinrichtung 30 umfasst des Weiteren eine Filteranordnung 33 zwischen der Lichtquelle 31 und dem Teilerspiegel 34.

In einer alternativen Ausführungsform kann statt der Filtereinrichtung 33 eine Filteranordnung 53 zwischen Teilerspiegel 34 und Kamera 51 der Aufnahmeeinrichtung 50 angeordnet sein. Des weiteren kann alternativ die Filteranordnung auch zwischen Teilerspiegel und Aufnahmebereich angeordnet sein. Auch Kombinationen dieser Anordnungen sind denkbar.

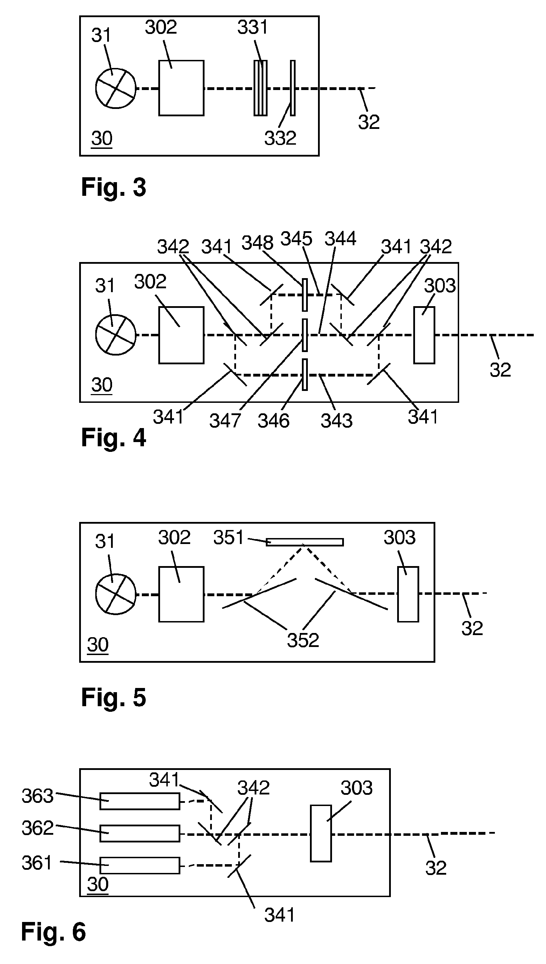

Der Filter 33 oder seine oben genannten alternativen Anordnungen wirken wie zu Figur 3 beschrieben und lassen lediglich 3 schmalbandige Spektren im Bereich rot, grün und blau passieren. Der Filter 33 oder seine alternativen Anordnungen haben für die 3 transmittierten Spektren eine von rot zu blau abnehmende Transmission, sodass das rote Spektrum einer höheren und das blaue Spektrum einer niedrigeren Transmission als das grüne Spektrum unterliegt. Statt einer Filteranordnung mit Filter 33 in der Beleuchtungseinrichtung 30, wie weiter unten in Figur 4 gezeigt, kann auch eine Strahlmanipulation oder Zusammenführung, wie in den Figuren 4 bis 6 unten gezeigt, verwendet werden. Alternativ sind auch einzelne oder alle Spektren im UV oder IR denkbar. Denkbar sind für alle gezeigten Anordnungen etwa auch Wellenlängen im Bereich von 365 nm (UV), 550 nm (grün) und 905 nm (IR). Auch ist die Verwendung von 2, 4 oder mehreren schmalbandigen Spektren denkbar.

Die gezeigte Anordnung ist für die Hellfeldinspektion bei senkrechtem Lichteinfall ausgelegt. Die Beleuchtungseinrichtung 30 beleuchtet die Oberfläche des Wafers 10 im Aufnahmebereich 12 senkrecht von oben mit drei schmalbandigen Spektren im Bereich rot, grün und blau. Die Aufnahmeeinrichtung 50 nimmt das durch das im Aufnahmebereich 12 reflektierte Licht gebildete Bild durch den Teilerspiegel 34 senkrecht von oben auf. Durch die Hellfeld-Inspektionsanordnung interferiert das durch die Beleuchtungseinrichtung auf den Aufnahmebereich 12 eingestrahlte Licht mit transparenten dünnen Schichten im Aufnahmebereich. Daher können über Interferenzeffekte Schwankungen in den Schichtdicken sowie Schwankungen in der optischen Dichte detektiert werden.

Prinzipiell kann die Anordnung auch zur Dunkelfelddetektion abgewandelt werden.

Die Figur 2 zeigt in Seitenansicht eine erfindungsgemäße Vorrichtung analog Figur 1. Hier jedoch ist die Hellfeld-Anordnung bei schrägem Lichteinfall realisiert. Die Lichtquelle 31 der Beleuchtungseinrichtung 30 bestrahlt mit ihrem Beleuchtungsstrahl 32 durch die Filteranordnung 33 eine Lackschicht 11 auf dem Wafer 10 unter einem Winkel. Die Kamera 51 der Aufnahmeeinrichtung 50 nimmt den auf der Lackschicht 11 gespiegelten Beleuchtungsstrahl unter dem gleichen Winkel auf.

Alternativ zur gezeigten Darstellung kann die Filteranordnung 33 statt im Beleuchtungsstrahl als Filteranordnung 53 im Abbildungsstrahl 52 angeordnet sein.

Die Figur 3 zeigt eine schematische Darstellung der zu Figur 1 zuerst genannten Beleuchtungseinrichtung samt Filter 33. Die Beleuchtungseinrichtung 30 umfasst eine Lichtquelle 31, etwa eine Weißlicht-LED- oder eine Quecksilberdampflampe. Der Kollektor 302 formt die Strahlung der Lichtquelle 31 zu einem Beleuchtungsstrahl 32, der durch den RGB-Interferenzfilter 331 hindurchtritt. Der RGB-Interferenzfilter lässt lediglich drei schmalbandige Spektren im Bereich rot, grün und blau passieren. Der anschließende Absorptionsfilter 332 dämpft das grüne Spektrum ein wenig und das blaue Spektrum etwas mehr. Der Absorptionsfilter 332 weist eine über den verwendeten Spektralbereich kontinuierliche zum kürzerwelligen Ende stärkere Absorption auf. Der Absorptionsfilter 332 könnte auch im Abbildungsstrahl oder vor oder innerhalb der Anordnung zur Wellenlängentrennung angeordnet sein.

Die Figur 4 zeigt eine Beleuchtungseinrichtung 30 mit wellenlängenselektiven Teilerspiegeln. Die Beleuchtungseinrichtung 30 umfasst eine polychrome Lichtquelle 31, etwa eine Weißlicht-LED- oder eine Quecksilberdampflampe. Der Kollektor 302 formt einen Beleuchtungsstrahl 32. Der Beleuchtungsstrahl 32 trifft nacheinander auf zwei dichroitische Spiegel 342. Der erste Teilerspiegel reflektiert rotes und länger welliges Licht, während der zweite Teilerspiegel blaues und kürzer welliges Licht ausblendet. Wellenlängen im mittleren grünen Bereich passieren beide Spiegel weitgehend ungehindert. Der blaue und der rote Strahl werden über Spiegel parallel zum ursprünglichen Beleuchtungsstrahl 32 umgelenkt. So entstehen drei parallele Strahlen im Wellenlängenbereich blau, grün und rot. Diese drei Strahlen werden durch entsprechende Filter, einen Blaufilter 348 für den blauen Strahl, einen Grünfilter 347 für den mittleren grünen Strahl und einen Rotfilter 346 für den roten Strahl, hindurchgeführt. Die Rot-, Grün- und Blaufilter lassen jeweils nur ein schmales Spektrum in ihrem Bereich rot, grün oder blau passieren. Nach den Rot-, Grün- und Blaufiltern liegen drei parallele schmalbandige Teilstrahlen vor. Diese Teilstrahlen werden über die Spiegel 441 und die dichroitische Spiegel 342 wieder zu einem einzigen Beleuchtungsstrahl 32 zusammengeführt. Ein Objektiv 303 kann in den Beleuchtungsstrahl zur Strahlanpassung eingeführt sein.

Die Figur 5 zeigt eine Beleuchtungseinrichtung zur Beleuchtung mit mehreren schmalbandigen Spektren mit einem RGB-Reflexionsfilter. Die Lichtquelle 31 der Beleuchtungseinrichtung 30, etwa eine Weißlicht-LED- oder eine Quecksilberdampflampe, strahlt über einen Kollektor 302 und einen Spiegel 352, einen Beleuchtungsstrahl 32 auf den RGB-Reflexionsfilter 351. Dieser reflektiert lediglich drei schmalbandige Spektren im Bereich rot, grün und blau auf den weiteren Spiegeln 352, der den Strahl in das Objektiv 303 der Beleuchtungseinrichtung führt. Der Beleuchtungsstrahl 32 verlässt das Objektiv 303 als zur Beleuchtung des Aufnahmebereichs angepasster Strahl mit drei schmalbandigen Spektren im Bereich rot, grün und blau.

Die Figur 6 zeigt eine Beleuchtungseinrichtung 30 mit drei Lasern. Die Strahlen eines roten Lasers 361, eines grünen Lasers 362 und eines roten Lasers 363 werden über Spiegel 341 und dichroitische Spiegel 342 zu einem einzigen Beleuchtungsstrahl 32 überlagert, der zur Anpassung an den Aufnahmebereich durch ein Objektiv 303 geführt ist. Statt der drei Laser können auch 3 LEDs in den entsprechenden Wellenlängen samt Kollektoren verwendet sein.

Die gezeigte Anordnung und das Verfahren dienen vor allem zur sogenannten Makroinspektion von Wafern. Sie ist jedoch nicht auf diese beschränkt.

## Patentansprüche

1. Vorrichtung zur Inspektion der Oberfläche eines Wafers umfassend eine Beleuchtungseinrichtung zur Beleuchtung eines Aufnahmebereichs des Wafers mit mindestens einem breitbandigen Spektrum und eine optische Aufnahmeeinrichtung mit einem Detektor zur polychromen Aufnahme des Aufnahmebereichs des Wafers aufgrund der Beleuchtung, **dadurch gekennzeichnet dass** die Aufnahmeeinrichtung eine Filteranordnung zur Auswahl von mehreren schmalbandigen Spektren umfasst.

2. Vorrichtung nach Anspruch 1 **dadurch gekennzeichnet, dass** die Beleuchtungseinrichtung oder die Aufnahmeeinrichtung eine Filteranordnung enthält, die die Intensität der Spektren nivelliert

3. Vorrichtung nach Anspruch 1 **dadurch gekennzeichnet, dass** die Beleuchtungseinrichtung und die Aufnahmeeinrichtung für die Hellfeldaufnahme ausgerichtet sind.

4. Vorrichtung nach Anspruch 1 bis 3, **dadurch gekennzeichnet, dass** die Filteranordnung die Spektren kürzerer Wellenlängen stärker dämpft.

5. Vorrichtung nach einem der Ansprüche 1 bis 4, **dadurch gekennzeichnet, dass** die Beleuchtungseinrichtung drei Laser umfasst.

6. Vorrichtung nach einem der Ansprüche 1 bis 4, **dadurch gekennzeichnet, dass** die Beleuchtungseinrichtung eine polychrome Lichtquelle und eine Filteranordnung zur Auswahl der schmalbandigen Spektren umfasst.

7. Vorrichtung nach einem der Ansprüche 1 bis 6, **dadurch gekennzeichnet, dass** die schmalbandigen Spektren im sichtbaren Bereich der Farben rot, grün und blau liegen.

8. Vorrichtung nach einem der Ansprüche 1 bis 7, **dadurch gekennzeichnet, dass** die schmalbandigen Spektren eine spektrale Breite von kleiner 20 nm, insbesondere kleiner 10 nm, insbesondere kleiner 5 nm, insbesondere kleiner 1 nm aufweisen.

9. Vorrichtung nach einem der Ansprüche 1 bis 8, **dadurch gekennzeichnet, dass** der Detektor eine Kamera ist.

10. Vorrichtung nach einem der Ansprüche 1 bis 9, **dadurch gekennzeichnet, dass** der Detektor eine 3- Chip- Kamera ist.

11. Vorrichtung nach einem der Ansprüche 1 bis 10, **dadurch gekennzeichnet, dass** die Aufnahmeeinrichtung Sensitivitäts-Peaks aufweist, die mit den Spektren der Beleuchtungseinrichtung übereinstimmen.

12. Verfahren zur Inspektion der Oberfläche eines Wafers, **gekennzeichnet durch** die folgenden Verfahrensschritte:
- Beleuchten eines Aufnahmebereichs des Wafers mit mindestens einem breitbandigen Spektrum,
- Aufnehmen mehrerer schmalbandiger Spektren vom Aufnahmebereich aufgrund der Beleuchtung.

13. Verfahren zur Inspektion der Oberfläche eines Wafers nach Anspruch 12, **gekennzeichnet durch** die folgenden Verfahrensschritte, dass das Beleuchten eines Aufnahmebereichs des Wafers mit mehreren schmalbandigen Spektren unter einem ersten Winkel erfolgt, und dass das Aufnehmen des Aufnahmebereichs aufgrund der Beleuchtung unter einem vom Wafer zum ersten Winkel gespiegelten Winkel erfolgt.

14. Verfahren nach einem der Anspruch 12 bis 13, **dadurch gekennzeichnet, dass** vor dem Beleuchten die Intensität bzw. die Intensitäten des oder der Spektren nivelliert wird bzw. werden.

15. Verfahren nach einem der Ansprüche 12 bis 13, **dadurch gekennzeichnet, dass** beim Nivellieren die kürzeren Wellenlängen stärker gedämpft werden.

16. Verfahren nach einem der Ansprüche 12 bis 13, **dadurch gekennzeichnet, dass** das Aufnehmen im Hellfeldmodus erfolgt.

17. Verfahren nach einem der Ansprüche 12 bis 13, **dadurch gekennzeichnet, dass** das Beleuchten mittels drei Laser erfolgt.

18. Verfahren nach einem der Ansprüche 12 bis 16, **dadurch gekennzeichnet, dass** das Beleuchten mittels einer polychromen Lichtquelle und einer Filteranordnung zur Auswahl der schmalbandigen Spektren erfolgt.

19. Verfahren nach einem der Ansprüche 12 bis 18, **dadurch gekennzeichnet, dass** die schmalbandigen Spektren im sichtbaren Bereich der Farben rot, grün und blau gewählt werden.

20. Verfahren nach einem der Ansprüche 12 bis 19, **dadurch gekennzeichnet, dass** die schmalbandigen Spektren in einer spektrale Breite von kleiner 20 nm, insbesondere kleiner 10 nm, insbesondere kleiner 5 nm, insbesondere kleiner 1 nm gewählt werden.

21. Verfahren nach einem der Ansprüche 12 bis 20, **dadurch gekennzeichnet, dass** das Aufnehmen mittels einer 3- Chip- Kamera erfolgt.

22. Verfahren nach einem der Ansprüche 12 bis 21 , **dadurch gekennzeichnet, dass** beim Aufnehmen die Sensitivitäts-Peaks der Aufnahmeeinrichtung mit den Spektren der Beleuchtungseinrichtung überlagert werden.
